(19) Europäisches Patentamt
European Patent Office
Office européen des brevets

(11) Veröffentlichungsnummer: **0 198 343 B1**

(12) # EUROPÄISCHE PATENTSCHRIFT

(45) Veröffentlichungstag der Patentschrift: **17.04.91**

(51) Int. Cl.[5]: **C08G 18/77**, C08G 18/78, C08G 18/10, C08J 3/03, C07C 267/00, C08G 18/08, C08G 18/83, C08K 5/42

(21) Anmeldenummer: **86104538.3**

(22) Anmeldetag: **03.04.86**

(54) **Carbodiimidgruppen enthaltende Isocyanat-Derivate, ein Verfahren zu ihrer Herstellung und ihre Verwendung als Zusatzmittel für wässrige Lösungen oder Dispersionen von Kunststoffen.**

(30) Priorität: **11.04.85 DE 3512918**

(43) Veröffentlichungstag der Anmeldung:
**22.10.86 Patentblatt 86/43**

(45) Bekanntmachung des Hinweises auf die Patenterteilung:
**17.04.91 Patentblatt 91/16**

(84) Benannte Vertragsstaaten:
**AT BE CH DE FR GB IT LI NL SE**

(56) Entgegenhaltungen:
**EP-A- 0 121 083**
**DE-A- 2 042 902**
**FR-A- 2 347 343**

(73) Patentinhaber: **BAYER AG**

**W-5090 Leverkusen 1 Bayerwerk(DE)**

(72) Erfinder: **Henning, Wolfgang, Dr.**
**Zur Linde 27**
**W-5067 Kürten(DE)**
Erfinder: **Meckel, Walter, Dr.**
**Zonser Strasse 9**
**W-4040 Neuss(DE)**

**EP 0 198 343 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue, Carbodiimid- und Sulfonatgruppen aufweisende Isocyanat-Derivate, ein Verfahren zu ihrer Herstellung durch zumindest teilweise Carbodiimidisierung von organischen Polyisocyanaten und anschließende umsetzung von gegebenenfalls noch vorliegenden freien Isocyanatgruppen mit Verbindungen mit gegenüber Isocyanatgruppen reaktonsfähigen Gruppen, wobei als Ausgangsmaterialien und/oder Reaktionspartner u.a. Sulfonatgruppen aufweisende Verbindungen verwendet werden, und die Verwendung der Sulfonatgruppen aufweisenden Isocyanat-Derivate als Zusatzmittel für wäßrige Dispersionen oder Lösungen von Kunststoffen mit eingebauten Carboxylgruppen und/ oder eingebauten in Carboxylgruppen überführbaren Gruppen.

Wäßrige Lösungen oder Dispersionen von ionisch modifizierten Kunststoffen sind in großer Zahl bekannt geworden. So wird beispielsweise in DE-PS 1 178, 586, DE-PS 1 184 946, DE-OS 1 495 745, DE-O5 1 770 068, DE-OS
2 314 512, DE-OS 2 446 440, DE-OS 2 543 091, DE-OS
2 642 073, US-PS 3 480 592, US-PS 3 388 087, US-PS
3 479 310, US-PS 3 756 992, US-PS 3 905 929 oder in "Angewandte Chemie" 82 , 53 ff (1970) die Herstellung von gegebenenfalls Harnstoffgruppen aufweisenden Polyurethandispersionen bzw. -lösungen bezchrieben.

Die Herstellung von wäßrigen oder wasserverdünnbaren, gegebenenfalls orgonizche Lösungsmittel und gegebenenfalls Urethangruppen aufweisenden Polykondensaten insbesondere Polyesterharzen gehört ebenfalls zum bekannten Stand der Technik (vgl. DE-OS 2 225 646, DE-AS 2 239 094, DE-OS 2 446 439, US-PS 3 876 582, US-PS 4 029 617, vgl. auch Houben-Weyl, "Methoden der organischen Chemie" XIV/2 (1963) Seiten 30 ff.).

Auch die Herstellung von eingebaute ionische Gruppen Aufweisenden Polymerisaten insbesondere Polyacrylaten gehört zum bekannten Stand der Technik (vgl. z.B. Houben-Weyl, "Methoden der organischen Chemie" XIV/1 (1961) Seiten 1033 ff. oder XIV/2 (1963) Seite 754).

Die Löslichkeit bzw. Dispergierbarkeit dieser Kunststoffe in Wasser wird oftmals durch in die Kunststoffe chemisch eingebaute Carboxylatgruppen gewährleistet, die als Gegenionen Ammoniumkationen auf Basis von Ammoniak oder von zumindest in der Hitze flüchtigen organischen Aminen aufweisen. Bei der meist unter Hitzeeinwirkung ablaufenden Trocknung der aus derartigen Kunststofflösungen und insbesondere -dispersionen hergestellten Flächengebilde wird zwar ein Großteil der ursprünglich vorliegenden Carboxylatgruppen durch Abspaltung des dem Kation entsprechenden Ammoniaks bzw. Amins in Carboxylgruppen überführt, jedoch weisen auch die dann vorliegenden, Carboxylgruppen aufweisenden Kunststoffe eine oftmals noch nicht voll befriedigende Wasserresistenz auf. Außerdem beschleunigen diese Carboxylgruppen katalytisch den selbstverständlich unerwünschten, hydrolytischen Abbau von Estergruppen aufweisenden Kunststoffen, wodurch das mechanische Werteniveau der genannten Flächengebilde insbesondere in feuchter Umgebung schnell verschlechtert werden kann.

Es war daher die der Erfindung zugrundeliegende Aufgabe, ein Zusatzmittel für wäßrige Lösungen und insbesondere Dispersionen von Carboxylgruppen und/oder in Carboxylgruppen überführbare Carboxylatgruppen aufweisenden Kunststoffen zur Verfügung zu stellen, welches bewirkt, daß vor oder während der Trocknung der aus den Lösungen bzw. Dispersionen hergestellten Flächengebilde die Carboxylgruppen in weitgehend nicht-hydrophile Gruppen überführt werden, die im übrigen ohne jeglichen katalytischen Einfluß auf den hydrolytischen Abbau von gegebenenfalls in den Kunststoffen vorliegenden Estergruppen sind. Gleichzeitig sollte die Überführung der Carboxylgruppen in die genannten nicht-hydrophilen Gruppen mit einer Vernetz ung der Flächengebilde einhergehen, um auch hierdurch ihre mechanischen Eigenschaften und insbesondere ihre Naßfestigkeit zu erhöhen.

Diese Aufgabe konnte mit der Bereitstellung der nachstehend näher beschriebenen erfindundungsgemäßen, Carbodiimidgruppen enthaltenden Isocyanat-Derivate gelöst werden. In diesen erfindungsgemäßen Isocyanat-Derivaten liegen zwar ebenfalls hydrophile Gruppen vor, jedoch ist deren Konzentration im allgemeinen wesentlich geringer, so daß durch den Einsatz der erfindungsgemäßen Zusatzmittel die Hydrophilie der Kunststoffe durch (i) Reduzierung der Gesamtkonzentration an hydrophilen Gruppen und (ii) den oben bereits angesprochenen Vernetzungseffekt ganz wesentlich reduziert werden kann.

Gegenstand der Erfindung sind Carbodiimidgruppen aufweisende Isocyanat-Derivate, die bei einem Gehalt an Carbodiimidgruppen -N=C=N- von 2 bis 30 Gew.-% im statistischen Mittel pro Molekül mindestens 0,8 Carbodiimidgruppen aufweisen, dadurch gekennzeichnet, daß sie 5 bis 200 Milliäquivalente pro 100 g Feststoff an chemisch eingebauten Sulfonatgruppen
und gegebenenfalls
0 bis 25 Gew.-%, bezogen auf Feststoff, an chemisch eingebauten, innerhalb von Polyetherketten vorliegen-

den Ethylenoxideinheiten $-CH_2-CH_2-O-$aufweisen.

Gegenstand der Erfindung ist auch ein Verfahren zur Herstellung von derartigen Carbodiimidgruppen enthaltenden Isocyanat-Derivaten durch zumindest teilweise Carbodiimidisierung der Isocyanatgruppen von a) organischen Polyisocyanaten oder Gemischen von organischen Poly- und Monoisocyanaten einer mittleren NCO-Funktionalität von 1,3 bis 2,5 und anschließende Umsetzung der gegebenenfalls in dem Carbodiimidisierungsprodukt noch vorliegenden freien Isocyanatgruppen mit b) mono- und/oder polyfunktionellen Verbindungen mit gegenüber Isocyanatgruppen reaktionsfähigen Gruppen unter Einhaltung eines solchen Äquivalentverhältnisses daß auf jede Isocyanatgruppe mindestens eine gegenüber Isocyanatgruppen reaktionsfähige Gruppe entfällt, dadurch gekennzeichnet, daß man als Komponenten a) und/oder b) chemisch eingebaute Sulfonatgruppen oder durch eine Neutralisationsreaktion in Sulfonatgruppen überführbare Gruppen aufweisende Verbindungen (mit)verwendet, wobei nach erfolgter Umsetzung, gegebenenfalls vorliegende, in Sulfonatgruppen überführbare Gruppen ganz oder teilweise durch eine Neutralisation in Sulfonatgruppen überführt werden, und wobei die Art und Mengenverhältnisse der Reaktionspartner, der Carbodiimidisierungsgrad und gegebenenfalls der Neutralisationsgrad so gewählt werden, daß die Verfahrensprodukte de obengenannten Gehalt an Carbodiimid- und Sulfonatgruppen aufweisen.

Gegenstand der Erfindung ist auch die Verwendung der Carbodiimidgruppen enthaltenden Isocyanat-Derivate als Zusatzmittel für wäßrige Dispersionen oder Lösungen von Carboxylgruppen und/oder Carboxylgruppen überführbare Gruppen aufweisenden Kunststoffen.

In der US-PS 2 937 164 werden bestimmte Monocarbodiimide als "Vernetzer" für lineare,synthetische, Carboxyl- oder Sulfonylgruppen aufweisenden Polymeren beschrieben. Sulfonatgruppen aufweisende Carbodiimide der Art der erfindungsgemäßen Produkte werden jedoch nicht erwähnt, im übrigen sind die beschriebenen Monocarbodiimide mit dem Nachteil behaftet, daß si bezüglich ihrer Reaktivität gegenüber Carboxylgruppen monofunktionell sind und daher keine Vernetzer im strengen Sinne des Wortes darstellen können.

Die EP-OS 121 083 beschreibt die Verwendung von aliphatischen, cycloaliphatischen oder aliphatisch-cycloaliphatischen Polycarbodiimiden für Carboxylgruppen aufweisende Latices. Auch hier werden Sulfonatgruppen aufweisende Carbodiimide der erfindungsgemäßen Art nicht beschrieben. Im übrigen wird in der Vorveröffentlichung hervorgehoben, daß aromatische Carbodiimide für den genannten Verwendungszweck ungeeignet sind. Demgegenüber sind, wie nachstehend näher ausgeführt, erfindungsgemäß insbesondere aromatische Carbodiimide besonders gut geeignet. Für ein en Einsatz der in EP-OS 121 083 beschriebenen Polycarbodiimide in wäßrigen Systemen ist es außerdem erforderlich, die Produkte mit Hilfe von externen Emulgatoren unter Verwendung spezieller Rühraggregate in wäßrige Emulsionen zu überführen, was nicht nur mit einem beträchtlichen Aufwand sondern auch mit dem Nachteil behaftet ist, daß die chemisch nicht fixierten Emulgatoren im letztendlich erhaltenen Flächengebilde an die Oberfläche migrieren und dort zu unerwünschten Effekten führen können. Zwar wird in der EP-OS 121 083 auch beschrieben, die Polycarbodiimide durch Umsetzung mit Dimethylaminopropylamin und anschließendes Versalzen mit p-Toluolsulfonsäure-methylester oder mit Dimethylsulfat in ein kationisch modifiziertes Salz zu überführen, wodurch die Produkte wasserlöslich werden, so daß auf die Verwendung eines externen Emulgators verzichtet werden kann. Der Nachteil dieser Verfahrensweise ist jedoch darin zu sehen, daß die kationisch modifizierten Zusatsmittel im Falle von anionischen Dispersionen zwangsläufig zu Verträglichkeitsproblemen führen müssen. So findet sich in der EP-OS 121 083 auch kein Ausführungsbeispiel betreffend die Verwendung eines kationisch modifizierten Zusatzmittels als Vernetzer für Carboxylatgruppen enthaltende Dispersionen.

Die nachstehend näher beschriebenen erfindungsgemäßen Isocyanat-Derivate unterscheiden sich in mehrfacher Hinsicht vorteilhaft von den genannten, Carbodiimidgruppen aufweisenden Zusatzmitteln des Standes der Technik:

1. Durch den Einbau von (anionischen) Sulfonatgruppen und gegebenenfalls hydrophilen Ethylenoxideinheiten können die erfindungsgemäßen Isocyanat-Derivate ohne weiteres wäßrigen Lösungen und insbesondere Dispersionen von Carboyxlat- und/oder Carboxylgruppen aufweisenden Kunststoffen zugefügt werden.

2. Je nach Gehalt der erfindungsgemäßen Zusatzmittel an Carbodiimidgruppen, der durch einfache Wahl der Art und Mengenverhältnisse der eingesetzten Ausgangsmaterialien leicht variierbar ist, kann der Vernetzungsgrad des letztendlich erhaltenen Flächengebildes eingestellt werden.

3. Die für die erfindungsgemäße Verwendung geeigneten, erfindungsgemäßen, Varbodiimidgruppen aufweisenden Isocyanat-Derivate sind nicht auf solche mit aliphatisch bzw. cycloaliphatisch gebunden Carbodiimidgruppen beschränkt. Es hat sich vielmehr gezeigt, daß insbesondere solche erfindungsgemäßen Verbindungen, deren Carbodiimidgruppen aromatisch gebunden sind, d.h. die aus wohlfeilen aromatischen Ausgangsisocyanaten herstellbar sind, für den genannten Verwendungszweck besonders

gut brauchbar sind.

Ausgangsmaterialien für das erfindungsgemäße Verfahren sind a) organische Polyisocyanate einer (mittleren) NCO-Funktionalität von 2,0 bis 2,5 oder Gemische von organischen Poly-und Monoisocyanaten einer mittleren NCO-Funktionalität von 1,3 bis 2,5 und gegebenenfalls b) im Sinne der Isocyanat-Additionsreaktion mono- oder polyfunktionelle Verbindungen mit gegenüber Isocyanatgruppen reaktionsfähigen Gruppen, wobei als Ausgangsmaterialien a) und/oder b) Sulfonatgruppen aufweisende Verbindungen mitverwendent werden.

Zu den Aufbaukomponenten a) gehören

a1) beliebige aliphatische, cycloaliphatische, araliphatische, aromatische oder heterocyclische Polyisocyanate, wie sie z.B. W. Siefken in Justus Liebigs Annalen der Chemie, 562 , Seiten 75 bis 136 beschrieben werden. Bevorzugte derartige Polyisocyanate a1) sind beispielsweise die technisch leicht zugänglichen Diisocyanate wie Hexamethylendiisocyanat,1-Isocyanato-3,3,5-trimethyl-5-isocyanatomethyl cyclohexan und insbesondere aromatische Diisocyanate wie 2,4- und gegebenenfalls 2,6-Diisocyanatotoluol oder 4,4'- und gegebenenfalls 2,4'-Diisocyanatodiphenylmethan, 3,4'-Diisocyanato-4-methyl-diphenylmethan oder 3,2'Diisocyanato-4-methyl-diphenylmethan sowie deren Isomeren oder Gemische dieser Diisocyanate. Besonders bevorzugte Diisocyanate sind jedoch durch Alkylsubstituenten sterisch gehinderte Phenylen diisocyanate wie z.B. 1-Methyl-3,5-diethyl-2,4-diisocyanatobenzol, 1-Methyl-3,5-diethyl-2,6-diisocyanatobenzol, sowie beliebige Gemische dieser beiden Diisocyanate, 1,3,5-Triisopropyl-2,4-diisocyanatobenzol oder alkylsubstituierte Phenylendiioscyanate der beispieslweise in US-PS 3 105 845 oder DE-OS 3 317 649 beschriebenen Art.

Weitere Ausgangsmaterialien a) sind beispielsweise

a2) hydrophil modifizierte Polyisocyanate. Hierzu gehören sowohl Sulfonatgruppen oder durch eine Neutralisationsreaktion in Sulfonatgruppen überführbare Gruppen aufweisende Polyisocyanate der z.B. in US-PS 3 959 329 beschriebenen Art als auch innerhalb von Polyetherketten eingebaute Ethylenoxideinheiten enthaltende Mono- oder Diisocyanate der in DE-OS 2 314 512, DE-OS 2 314 513, DE-OS 2 551 094, DE-OS 2 651 506, US-PS 3 920 598 oder US-PS 3 905 929 beschriebenen Art. Auch durch Umsetzung von 2,4-Diisocyanatotoluol mit äquimolaren Mengen an Chlorsulfonsäure bei Raumtemperatur in Gegenwart von Lösungsmitteln wie 1,2-Dichlorethan erhaltenes sulfoniertes Diisocyanat ist als Verbindung mit, mit Neutralisationsmitteln wie z.B. Triethylamin in Sulfonatgruppen überführbaren, Gruppen geeignet. Die Neutralisation erfolgt bei Verwendung derartiger Verbindungen als Komponente a2) im Anschluß an die Umsetzung.

Besonders bevorzugte hydrophil modifizierte Polyisocyanate sind jedoch NCO-Prepolymere, wie sie durch Umsetzung von überschüssigen Mengen der unter a1) beispielhaft genannten Diisocyanate, insbesondere den besonders bevorzugten, sterisch gehinderten Phenylendiisocyanate mit Sulfonatgruppen aufweisenden Diolen erhalten werden. Bei der Herstellung dieser NCO-Prepolymere wereden die Ausgangsmaterialien im allgemeinen unter Einhaltung eines NCO/OH-Äquivalentverhältnisses von 1,2:1 bis 10:1 bei 20 bis 150° C zur Reaktion gebracht. Für die Herstellung der NCO-Prepolymere geeignete, Sulfonatgruppen aufweisende Diole sind insbesondere solche der allgemeinen Formel

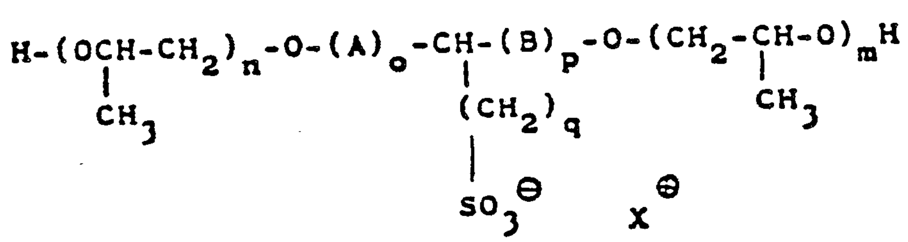

wobei

| | |
|---|---|
| A und B | für gleiche oder verschiedene zweiwertige aliphatische Kohlenwasserstoffreste mit 1 bis 6 Kohlenstoffatomen stehen, |
| R | für Wasserstoff, einen aliphatischen Kohlenwasserstoffrest mit 1 bis 4 Kohlenstoffatomen oder einen Phenylrest steht, X |
| ⊕ | für Alkalimetallkation oder eine gegebenenfalls substituierte Ammoniumgruppe steht, |
| n und m | für gleiche der verschiedenen Zahlen von 0 bis 30 stehen, |
| o und p | für jeweils 0 oder 1 stehen und |
| q | für eine ganze Zahl von 0 bis 2 steht. |

Die Herstellung dieser Sulfonatdiole ist beispielsweise in DE-AS 2 446 440 bzw. US-PS 4 108 814 beschrieben. Besonders bevorzugte derartige Sulfonatdiole sind solche für welche m und n jeweils für

gleiche oder verschiedene Zahlen von 0 bis 3 stehen.

Weitere Ausgangsmaterialien a) sind beispielsweise

a3) organische Monoisocyanate wie z.B. n-Hexylisocyanat, Phenylisocyanat oder p-Toluylisocyanat. Diese Monoisocyanate werden, wie bereits oben ausgeführt, allenfalls in Abmischung mit organischen Polyisocyanaten der beispeilhaft genannten Art eingesetzt, wobei die Abmischung eine mittlere NCO-Funktionalität von 1,3 bis 2,5 vorzugsweise 1,3 bis 2 aufweist.

Ferner können in der Komponente a) auch andere, modifizierte Polyisocyanate vorliegen, beispielsweise Umsetzungsprodukte überschüssigen Mengen an organischen Diisocyanaten der unter a1) beispielhaft genannten Art mit Di- oder Trihydroxyalkanen eines unter 400 liegenden Molekulargewichts wie z.B. Ethylenglykol, Propylenglykol, Tetramethylendiol, Hexamethylendiol, Trimethylolpropan und/oder Glycerin.

Bei den gegebenenfalls beim erfindungsgemäßen Verfahren mitzuverwendenden Aufbaukomponenten b) handelt es sich beispielsweise um

b1) mehrwertige, insbesondere zweiwertige Alkohole eines unter 400 liegenden Molekulargewichts wie z.B. Ethylenglykol, Propylenglykol, Tetramethylendiol, Hexamethylendiol, Ocatmethylendiol, Neopentylglykol, 2-Methyl-1,3-di hydroxypropan, Glycerin, Trimethylolpropan, Diethylenglykol, Triethylenglykol, Tetraethylenglykol, Polyethylenglykole des genannten Molekulargewichtsbereichs, Dipropylenglykol, Tripropylenglykol, oder beliebige Gemische derartiger, mehrwertiger Alkohole.

Weitere gegebenenfalls mitzuverwendende Aufbaukomponenten b) sind beispielsweise

b2) polyfunktionelle, vorzugsweise difunktionelle Amine eines unter 400 liegenden Molekulargewichts mit mindestens zwei primären und/oder sekundären Aminogruppen wie 1,2-Diaminoethan, Hexamethylendiamin, Piperazin, 1-Amino-3-aminomethyl-3,5,5-trimethylcyclohexan, 4,4'-Diaminodicyclohexylmethan oder beliebige Gemische derartiger Amine. Die Verwendung derartiger Amine ist im Vergleich zu den Hydroxylgruppen aufweisenden Komponenten b) weniger bevorzugt.

Weitere, gegebenenfalls mitzuverwendende Aufbaukomponenten b) sind beispielsweise

b3) hydrophil modifizierte ein-oder zweiwertige Alkohole wie beispielsweise die bereits oben unter a2) beispielhaft genannten Sulfonatdiole oder auch Ethylenoxideinheiten aufweisende Verbindungen der allgemeinen Formel

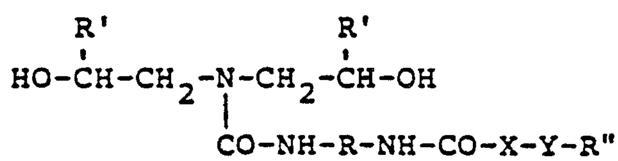

In obigen Formeln (I) stehen

- R für reinen zweiwertigen Rest, wie er durch Entfernung der Isocyanatgruppen aus einem Diisocyanat der Formel $R(NCO)_2$ der vorstehend unter a1) genannten Art erhalten wird,
- R' für Wasserstoff oder einen einwertigen Kohlenwasserstoffrest mit 1 bis 8 Kohlenstoffatomen, vorzugsweise für Wasserstoff oder eine Methylgruppe,
- R" für einen einwertigen Kohlenwasserstoffrest mit 1 bis 12 Kohlenstoffatomen, vorzugsweise einen unsubstituierten Alklylrest mit 1 bis 4 Kohlenstoffatomen,
- X für eine Polyalkylenoxidkette mit 5 bis 90, vorzugsweise 20 bis 70 Kettengliedern, welche zumindest zu 40 %, vorzugsweise zumindest zu 65 % aus Ethylenoxideinheiten bestehen und die neben Ethylenoxideinheiten auch Propylenoxid-, Butylenoxid- oder Styroloxid-Einheiten darstellen können, wobei unter den letzgenannten Einheiten Propylenoxideinheiten bevorzugt sind,
- Y für Sauerstoff oder -NR"'-, wobei R"' bezüglich seiner Definition R" entspricht.

Die Herstellung der Verbindungen der obengenannten Formeln kann gemäß den Verfahrensweisen der DE-A 2 314 512 bzw. 2 314 513 erfolgen, wobei in Ergänzung der dort gemachten Offenbarung darauf hingewiesen wird, daß anstelle der dort als Ausgangsmaterial erwähnten monofunktionellen Polyetheralkohole auch solche eingesetzt werden können, deren Polyethersegment außer Ethylenoxid-Einheiten auch bis zu 60 Gew.-%, bezogen auf Polyethersegment an Propylenoxid-, Butylenoxid- oder Styroloxid-, vorzugsweise Propylenoxid-Einheiten aufweisen. Der Anteil derartiger "gemischter Polyethersegmente" kann in speziellen Fällen spezifische Vorteile mit sich bringen.

Zu den erfindungsgemäß geeigneten Hydrophilen einwertigen Alkoholen gehören beispielsweise Verbindungen der Formel

H-X-Y-R"

in welcher
X, Y und R" die soeben genannte Bedeutung haben.

Diese einwertigen, hydrophil modifizierten Alkohole können nach den in US-PS 3 905 929 oder 3 920 538 beschriebenen Verfahren hergestellt werden, beispielsweise durch Alkoxylierung von geeigneten Startermolekülen wie z.B. n-Butanol mit Ethylenoxid und gegebenenfalls weiteren Alkylenoxiden wie z.B. Propylenoxid.

Weitere gegebenenfalls mitzuverwendende Aufbaukomponenten b) sind beispielsweise
b4) Aminosulfonate, insbesondere Diaminosulfonate der in CA-PS 928 323 beschriebenen Art, wie insbesondere das Natriumsalz der N-(2-Aminoethyl)-2-aminoethansulfonsäure.

Weitere gegebenenfalls mitzuverwendende Aufbaukomponenten b) sind beispielsweise
b5) einwertige Alkohole oder monofunktionelle primäre bzw. sekundäre Amine eines unter 400 liegenden Molekulargewichts. Hierzu gehören beispielsweise Methanol, Ethanol, n-Butanol, i-Butanol, n-Octanol oder n-Dodecanol bzw. Methylamin, Ethylamin, n-Hexylamin oder Anilin. Diese einwertigen Komponenten werden oftmals als Kettenabbrecher mitverwendet.

Weitere gegebenenfalls mitzuverwendende Aufbaukomponenten b) sind beispielsweise Hydrazin, Hydrazinhydrat, oder Hydrazinderivate wie Carbonsäurehydrazide oder Semicarbazide. Auch Ammoniak kann als Aufbaukomponente b) mitverwendent werden und wirkt als besonders gut geeigneter Kettenabbrecher.

Die aus den beispielhaft genannten Ausgangsmaterialien hergestellten, erfindungsgemäßen Carbodiimidgruppen aufweisenden Isocyanat-Derivate weisen bei einem Gehalt von 2 bis 30, vorzugsweise 5 bis 15 Gew.-% an Carbodiimidgruppen -N=C=N- im statistischen Mittel pro Molekül 0,8 bis 30, vorzugsweise 1 bis 25 und besonders bevorzugt 1,2 bis 2o derartige Carbodiimidgruppen auf. Ihr Gehalt an eingebauten Sulfonatgruppen liegt bei 5 bis 200, vorzugsweise 5 bis 150 und besonders bevorzugt bei 5 bis 120 Milliäquivalenten pro 100 g Feststoff. Ihr Gehalt an eingebauten, innerhalb von Polyetherketten vorliegenden Ethylenoxideinheiten liegt bei 0 bis 25, vorzugsweise 0 bis 20 und besonders bevorzugt 0 bis 15 Gew.-%, bezogen auf Feststoff. Vorzugsweise liegen die genannten hydrophilen Gruppierungen in den erfindungsgemäßen Verbindungen in solchen Mengen vor, daß ihre Löslichkeit oder Dispergierbarkeit in Wasser gewährleistet ist. Es ist jedoch auch möglich, jedoch keinesfalls bevorzugt, zusätzlich zu den genannten chemisch eingebauten hydrophilen Gruppierungen externe Emulgatoren mitzuverwenden, die mit den erfindungsgemäßen Verbindungen abgemischt werden, um ihre Löslichkeit bzw. Dispergierbarkeit in Wasser zu gewährleisten. Derartige Emulgatoren sind beispielsweise ethoxyliertes Nonylphenol, Polyoxyethylenlaurylether oder Polyoxyethylenlaurat, -oleat oder -stearat, wobei diese Verbindungen im allgemeinen von 8 bis 50 Oxyethyleneinheiten pro Molekül aufweisen.

Der Gehalt der erfindungsgemäßen Verbindungen an den genannten, erfindungswesentlichen Gruppierungen wird durch entsprechende Wahl der Art und Mengenverhältnisse der Ausgangsmaterialien bzw. des Carbodiimidisierungsgrades sichergestellt. Unter "Carbodiimidisierungsgrad" ist hierbei der Prozentsatz der in den Ausgangsisocyanaten a) vorliegenden Isocyanatgruppen zu verstehen, die unter Carbodiimidisierung zur Umsetzung gebracht wird. Vorzugsweise weisen die erfindungsgemäßen Verbindungen nach ihrer Herstellung keine freien Isocyanatgruppen mehr auf.

Die Herstellung der erfindungsgemäßen Verbindungen, d.h. das erfindungsgemäße Verfahren kann nach verschiedenen Varianten erfolgen.

Die einfachste Art der Durchführung des erfindungsgemäßen Verfahrens besteht darin, Gemische aus organischen Polyisocyanaten, vorzugsweise Diisocyanaten mit Monoisocyanaten unter vollständiger Carbodiimidisierung der Isocyanatgruppen umzusetzen, wobei Sulfonatgruppen und gegebnenenfalls Ethylenoxideinheiten aufweisende Isocyanate in einer solchen Menge mitverwendet werden, daß das resultierende Produkt einen Sulfonatgruppengehalt innerhalb der obengenannten Grenzen aufweist, und wobei das Mengenverhältnis von Polyisocyanat zu Monoisocyanat, d.h. die mittlere NCO-Funktionalität des Isocyanatgemischs so gewählt wird, daß während der Carbodiimidisierungsreaktion ein Kettenabbruch stattfindet, so daß die resultierenden Produkte einen Gehalt an Carbodiimidgruppen innerhalb der obengenannten Bereiche aufweisen. Ein derartiger Kettenabbruch tritt stets dann ein, wenn die mittlere NCO-Funktionalität unter 2,0 liegt. Durch einfache Wahl der mittleren NCO-Funktionalität der als Komponente a) eingesetzten Isocyanate kann somit das Molekulargewicht und damit die Anzahl der im statistischen Mittel in den Verfahrensprodukten vorliegenden Carbodiimidgruppen eingestellt werden.

Gemäß einer weiteren Variante des erfindungsgemäßen Verfahrens werden die Isocyanatgruppen der Ausgangskomponente a) nur zum Teil carbodiimidisiert und die dann noch vorliegenden freien Isocyanatgruppen mit gegenüber Isocyanatgruppen reaktionsfähigen Gruppen der oben unter b ) beispielhaft genannten Art zur Umsetzung gebracht, wobei der Carbodiimidisierungsgrad der ersten Reaktionsstufe so zu wählen ist, daß im letztendlich erhaltenen Verfahrensprodukt eine den obengemachten Angaben entsprechende Menge an Carbodiimidgruppen vorliegt. Hierbei wird die Menge der Komponente b) stets so

bemessen, daß für jede freie Isocyanatgruppe des ancarbodiimidisierten Isocyanats mindestens eine gegenüber Isocyanatgruppen reaktionsfähige Gruppe zur Verfügung steht. Bei dieser Variante des erfindungsgemäßen Verfahrens können die Sulfonatgruppen sowohl über die Komponente a) beispielsweise durch Verwendung von Sulfonatgruppen aufweisenden NCO-Prepolymeren als Komponente a) oder als Teil der Komponente a) und/oder über die Komponente b), beispeilsweise unter Verwendung von Sulfonatdiol der oben beispielehaft genannten Art als Komponente b) oder als Teil der Komponente b) oder auch unter Verwendung von Diaminosulfonaten oder anderen Verbindungen, die sowohl gegenüber Isocyanatgruppen reaktonsfähige Gruppen als auch eingebaute Sulfonatgruppen aufweisen, in das Verfahrensprodukt eingebaut werden. Die Anzahl der im statistischen Mittel in den Verfahrensprodukten vorliegenden Carbodiimidgruppen kann auch hier durch geeignete Wahl der Funktionalität der Ausgangskomponenten, d.h. durch eine hierdurch mögliche Einstellung des Molekulargewichts vorbestimmt werden. Falls beispielsweise die Anzahl der Carbodiimidgruppen im ancarbodiimidisierten Isocyanat bereits ausreicht, wird man bei der Umsetzung mit der Komponente b) auf eine Kettenverlängerungsreaktion verichten, d.h. man wird vorzugsweise als Komponente b) ausschließlich kettenabbrechende Aufbaukomponenten der beispielhaft genannten Art verwenden. Umgekehrt, kann bei zumindest anteiliger Verwendung von difunktionellen Aufbaukomponenten b) ein Kettenverlängerungsreaktion herbeigeführt werden, wodurch sich selbstverständlich im statistischen Mittel die Anzahl der pro Molekül in den Verfahrensprodukten vorliegenden Carbodiimidgruppen erhöht. Bei dieser Variante des erfindungsgemäßen Verfahrens weist die Komponente a) vor der Carbodiimidisierungsreaktion vorzugsweise eine NCO-Funktionalität von 1,8 bis 2,5 auf. Nach dieser Verfahrensweise lassen sich auch wertvolle Verfahrensprodukte herstellen, die im statistischen Mittel, den obengemachten Angaben bezüglich der Anzahl der Carbodiimideinheiten entsprechend, eine Vielzahl von Carbodiimideinheiten aufweisen.

Die gegebenenfalls in den Verfahrensprodukten vorliegenden Ethylenoxideinheiten werden auch bei der zweiten Variante des erfindungsgemäßen Verfahrens durch Mitverwendung von Ethylenoxideinheiten aufweisenden Komponenten a) und/oder durch Mitverwendung von Ethylenoxideinheiten aufweisenden Komponenten b) der oben beispielhaft genannten Art in das Verfahrensprodukt eingebaut.

Bei beiden Varianten des erfindungsgemäßen Verfahren erfolgt die zumindest teilweise Carbodiimidisierung der Isocyanatgruppen der Komponente a) in an sich bekannter Weise, beispielsweise in Analogie zu der vorbekannten Lehre des Standes der Technik, wie sie beispielsweise aus den US-Patenschriften 2 840 589, 2 941 966 oder den Deutschen Offenlegungsschriften 2 504 400, 2 552 350 oder 2 653 120 hervorgeht. Besonders vorteilhaft erfolgt die zumindest teilweise Carbodiimidisierung der Isocyanatgruppen der Komponente a) unter Verwendung von Carbodiimidisierungskatalysatoren wie sie z.B. in den US-Patentschriften 2 941 966, 2 853 518 oder 2 853 473 oder in der DE-OS 2 614 323 beschrieben sind. Besonders bevorzugt erfolgt die Carbodiimidisierung unter Verwendung von 1-Methyl-1-phospha-2-cyclopenten-1-oxid oder 1-Methyl-1-phospha-3-cyclopenten-1-oxid oder Mischungen dieser Verbindungen als Katalysatoren. Selbstverständlich können auch beiliebige andere Carbodiimidisierungskatalysatoren des Standes der Technik eingesetzt werden. Die zumindest teilweise Carbodiimidisierung der Komponente a) erfolgt im algemeinen unter Verwendung von 0,001 bis 5, vorzugsweise 0,02 bis 2 Gew.-%, bezogen au f Komponente a), an Carbodiimidisierungskatalysatoren der beispielhaft genannten Art innerhalb des Temperaturbereichs von 0 bis 200 °C, vorzugsweise 20 bis 150 °C. Falls nur eine teilweise Carbodiimidisierung der Isocyanatgruppen der Komponente a) angestrebt wird, empfiehlt es sich, die Carbodiimidisierungsreaktion beim jeweils gewünschten Carbodiimidisierungsgrad durch Zugabe eines Katalysatorengifts abzubrechen. Geeignete Katalysatorengifte sind beispielsweise in der DE-OS 2 614 323 beschrieben.

Bevorzugte Katalysatorengifte, die sich insbesondere zur Desaktivierung der oben beispielhaft genannten Phospholinoxide eignen sind beispielsweise Phosphortrichlorid, Phosphorpentachlorid oder Thionylchlorid. Die Katalysatorengifte werden im allgemeinen in einer Menge von mindestens 100 Mol-%, bezogen auf den Katalysator eingesetz.

Um bei Raumtemperatur lagerstabile, ancarbodiimidisierte Isocyanate zu erhalten kann es auch empfehlenswert sein, die Carbodiimidisierungsreaktion bei 50 bis 200 °C durchzuführen und zwar unter Verwendung von Katalysatoren, die nur in diesem erhöhten Temperaturbereich ihre katalytische Wirksamkeit entfalten. Derartige Katalysatoren sind z.B. von I.I Monagle in J. org. Chemistry 27 , 3851 (1962) beschrieben worden. Nach Erreichen des gewünschten Carbodiimidisierungsgrades kann die Reaktion durch einfaches Abkühlen zum Stillstand gebracht werden.

Der Fortschritt der Carbodiimidisierungsreaktion kann an der Kohlendioxidentwicklung und am Abfall des NCO-Gehalts des Reaktionsgemischs verfolgt werden. In der Regel entstehen bei der teilweisen Carbodiimidisierung keine einheitlichen Verfahrensprodukte sondern Mischungen von Carbodiimiden mit unterschiedlichen Gehalten and Carbodiimideinheiten pro Molekül, sowie gegegebenenfalls mit noch unreagiertem Ausgangsisocyanat. Alle oben gemachten Angaben bezüglich des Gehalts der Verfahrensprodukte

an Carbodiimidgruppen und bezüglich der Anzahl an Carbodiimidgruppen pro Molekül der Verfahrensprodukte beziehen sich daher auf statische Mittelwerte.

Die Carbodiimidisierungsreaktion kann in Gegenwart oder auch in Abwesenheit von Lösungsmitteln durchgeführt werden. Beispiele geeigneter Lösungsmittel sind Benzol, Toluol, Xylol, Cyclohexan, Chlorbenzol, o-Dichlorbenzol, Dimethylformamid, Perchlorethylen, Ethylacetat, Butylacetat, Diethylenglykoldimethylether, Tetrahydrofuran, Aceton, Methylethylketon, Cyclohexanon oder beliebige Gemische derartiger Lösungsmittel. Das lösungsmittelfrei hergestellte Carbodiimidisierungsprodukt verfestigt sich oft zu einem harten Harz, das zu einem Pulver zerrieben und später erfindungsgemäß verwendet bzw. durch Umsetzung mit der Komponente b) weiterverarbeitet werden kann.

Die im Anschluß an die Carbodiimidisierungsreaktion gegebenenfalls noch durchzuführende Umsetzung mit der Komponente b) erfolgt ebenfalls in Gegenwart oder in Abwesenheit von Lösungsmitteln der beispielhaft genannten Art innerhalb eines Temperaturbereichs von 0 bis 150, vorzugsweise 20 bis 100 °C. Hierbei können bei Verwendung von unterschiedlichen Komponenten b) die Reaktionskomponenten sowohl gleichzeitig als auch nacheinander zur Reaktion gebracht werden, wobei das Verhältnis der Isocyanatgruppen der ancarbodiimidisierten Komponente a) zu den gegenüber Isocyanatgruppen reaktionsfähigen Gruppen bei 1:1 bis 1:5, vorzugsweise 1:1 bis 1:2 liegt. Besonders bevorzugt ist eine Verfahrensweise, die darin besteht, als Komponente a) Sulfonatgruppen-freie Diisocyanate der beispielhaft genannten Art zu verwenden, die Carbodiimidisierungsreaktion bis zu einem solchen Carbodiimidisierungsgrad zu führen, daß im letztendlich erhaltenen Verfahrensprodukt die erforderliche Menge an Carbodiimidgruppen vorhanden ist, das so erhaltene ancarbodiimidisierte Diisocyanat bzw. Diisocyanatgemisch mit difunktionellen Sulfonatgruppen aufweisenden Verbindungen b) und gegebenenfalls difunktionellen, Ethylenoxideinheiten aufweisenden Verbindungen b) unter Einhaltung eines Äquivalentverhältnisse s von Isocyanatgruppen zu gegenüber Isocyanatgruppen reaktionsfähigen Gruppen von 1,05:1 bis 10:1 zur Reaktion zu bringen und anschließend die dann noch vorliegenden freien Isocyanatgruppen mit Kettenabbrechern der unter b) beispeilhaft genannten Art unter Einhaltung eines Äquivalentverhältnisses von Isocyanatgruppen zu gegenüber Isocyanatgruppen reaktionsfähigen Gruppen von 1:1 bis 1:1,5, vorzugsweise 1:1 oder mit einem hohen Überschuß von Kettenverlängerungsmitteln der unter b) beschriebenen Art, vorzugsweise unter Einhaltung eines Äquivalentverhältnisses von Isocyanatgruppen zu gegenüber Isocyanatgruppen reaktionsfähigen Gruppen von mindestens 1:2 umzusetzen, so daß ein NCO- freies Produkt entsteht. Weitgehend äquivalent zu dieser besonders bevorzugten Arbeitsweise wäre eine Arbeitsweise, die darein besteht, die ancarbodiimidisierten Diisocyanate mit einem Gemisch aus difunktionellen hydrophilen Aufbaukomponenten der zuletzt beispielhaft genannten Art mit Kettenabbrechern der zuletzt beispielhaft genannten Art unter Einhaltung eines Äquivalentverhältnisses von Isocyanatgruppen zu gegenüber Isocyanatgruppen reaktionsfähigen Gruppen von 1:1 bis 1:1,5 zur Reaktion zu bringen.

Nach der Umsetzung kann das gegebenenfalls mitverwendete Lösungsmittel beispielsweise durch Destillation entfernt werden. Bei dem lösungsmittelfreien Reaktonsprodukt handelt es sich im allgemeinen um einen Feststoff, der jederzeit in einem organischen Lösungsmittel aufgenommen oder auch ohne Verwendung von Lösungsitteln erfindungsgemäß verwendet werden kann. Hierzu können die erfindungsgemäßen Verbindungen den Kunststoffdispersionen in Form von wäßrigen Lösungen oder Dispersionen oder auch in Substanz zugesetzt werden.

Die erfindungsgemäßen Verbindungen dienen insbesondere als Zusatzmittel für wäßrige Lösungen und insbesondere Dispersionen von Carboxylatgruppen und/oder Carboxylgruppen enthaltenden Kunststoffen, wobei die Gegenionen der Carboxylatgruppen vorzugsweise Ammoniumkationen auf Basis von Ammoniak oder auf Basis von zumindest in der Hitze flüchtigen Aminen bestehen. Die erfindungsgemäße Verwendung eignet sich insbesondere zur Modifizierung von Carboxylatgruppen und/oder Carboxylgruppen aufweisenden, in Wasser gelöst oder dispergiert vorliegenden Polyurethanen, jedoch ist die erfindungsgemäße Verwendung auch zur Modifizierung von in Wasser gelöst oder dispergiert vorliegenden, Carboxylatgruppen der genannten Art und/oder Carboxylgruppen aufwiesenden Polyesterharzen, Polybutadienen oder Polyacrylatharzen geeignet. Die Menge der erfindungsgemäßen Zusatzmittels richtet sich einerseits nach dem Gehalt des gelösten oder dispergierten Polymeren an Carboxylatgruppen und/oder Carboxylgruppen und andererseits nach dem angestrebten Eigenschaftsbild des aus den Lösungen oder Dispersionen letztendlich erhaltenen Flächengebildes. So kann es einersits wünschenswert sein, daß Verhältnis von Carboxylatgruppen und/oder Carboxylgruppen des gelösten oder dispergierten Kunststoffs zu Carbodiimidgruppen des Additivs größer als 1:1 zu wählen, um insbesondere im Falle der Verwendung von Zusatzmitteln mit mehr als zwei Carbodiimidgruppen pro Molekül eine zu starke Vernetzung des Produkts zu vermeiden, andererseits kann durch die Verwendung von mindestens äquivalenten Mengen an Carbodiimidgruppen, insbesondere bei (im statistischen Mittel) mindestens difunktionellen Carbodiimiden die Reaktionszeit während der Trocknung der letztendlich erhaltenen Flächengebilde verkürzt werden.

Die die erfindungsgemäßen Zusatzmittel enthaltenden Lösungen oder Dispersionen von Carboxylatgruppen der ge nannten Art und/oder Carboxylgruppen enthaltenden Polymeren, insbesondere die entsprechenden wäßrigen Polyurethandispersionen, die einen Gesamtgehalt an Carboxylatgruppen der genannten Art und Carboxylgruppen von 0,2 bis 200 Milliäquivalenten pro 100 g Feststoff aufweisen, können in üblicher Weise bei Raumtemperatur oder bei erhöhter Temperatur verarbeitet und zu Flächengebilden aufgetrocknet werden. Die im Einzelfall zu wählende Tracknungstemperatur, die vor allem von der chemischen Zusammensetzung des Materials abhängt kann durch einen einfachen Vortest ermittelt werden. Sie liegt im allgemeinen bei 20 bis 150 °C.

Wäßrige Lösungen und insbesondere Dispersionen von Carboxylatgruppen der genannten Art und gegebenenfalls Carboxylgruppen aufweisenden Kunststoffen, insbesondere Polyurethanen, die die erfindungsgemäßen Zusatzmittel enthalten, können besonders vorteilhaft zur Herstellung von hochwertigen Beschichtungen der unterschiedlichsten Substrate wie z.B. Leder, Textil, Papier, Holz, Metall, Glas und Kunststoffe verwendet werden, wobei die letztendlich erhaltenen Beschichtungen eine im Vergleich zu den nichterfindungsgemäß modifizierten Systemen wesentlich erhöhte Wasserfestigkeit aufweisen.

In den nachfolgenden Beispielen beziehen sich alle Prozentangaben auf Gewichtsprozente.

Beispiel 1

178 Gew.-Teile (0,775 Mol) einer Mischung aus 3,5-Diethyl-2,4-toluylen-diisocyanat und 3,5-Diethyl-2,6-toluylen-diisocyanat (Verhältnis 7:3) werden bei 80 °C mit 118 Gew.-Teilen (0,275 Mol) eines propoxylierten Adduktes aus 2-Butendiol-1,4 und $NaHSO_3$ (Molekulargewicht: 430) innerhalb von 70 Minuten bis zu einem NCO-Wert von 14,19 % umgesetz. Das Reaktionsprodukt wird auf 80 °C abgekühlt und mit 200 Gew.-Teilen N-Methylpyrrolidon verdünnt. Es wird mit 59,5 Gew.-Teilen (0,5 Mol) Phenylisocyanat versetzt und die Carbodiimidisierung mit 5 ml einer 25 %igen Lösung eines technischen Gemisches aus 1-Methyl-1-phospha-2-cyclopenten-1-oxid und 1-Methyl-1-phospha-3-cyclopenten-1-oxid in N-Methylpyrrolidin ("Phospholinoxid") gestartet, wobei die Temperatur auf 120 °C erhöht wird. Nach 5 Stunden Reaktionszeit ist der NCO-Wert auf 0 % gefallen. Es wird auf 60 °C abgekühlt und mit 2 ml Phosphortrichlorid abgebrochen.

Man erhält eine Lösung mit einem Feststoffgehalt von 61 Gew.-%, einem Gehalt an Carbodiimidgruppen -N=C=N- von 9,0 Gew.-% bezogen auf Feststoff und einem Gehalt an $SO_3$-Ionen von 88 Milliäquivalenten pro 100 g Feststoff. In dem Produkt liegen pro Molekül im Mittel 3 Carbodiimidienheiten vor.

Beispiel 2

186 Gew.-Teile (0,65 Mol) 1,3,5-Triisopropylbenzol-2,4-diisocyamat werdem beo 100 °C mit 137 Gew.-Teilen (0,3175 Mol) eines propoxylierten Adduktes aus 2-Butendiol-1,4 und $NaHSO_3$ (Molekulargewicht: 430) innerhalb von 120 Minuten bis zu einem NCO-Wert von 9,38 % umgesetzt. Das Reaktionsprodukt wird mit 200 Gew.-Teilen N-Methylpyrrolidon verdünnt, mit 39,6 Gew.-Teilen Phenylisocyanat versetzt und die Carbodiimidisierung mit 5 ml der in Beispiel 1 genannten Phospholinoxidlösung gestartet, wobei die Temperatur auf 120 °C erhöht wird. Nach 6 Stunden Reaktionszeit ist der NCO-Wert auf 0 % gefallen. Es wird auf 60 °C abgekühlt und mit 1,2 ml Phosphortrichlorid abgebrochen.

Man erhält eine Lösung mit einem Feststoffgehalt von 64 Gew.-%, einem Gehalt an Carbodiimidgruppen -N=C=N- von 5,8 Gew.- bezogen auf Feststoff und einem Gehalt an $SO_3$-Ionen von 88 Milliäquivalenten pro 100 g Feststoff. In dem Produkt liegen pro Molekül im Mittel 3 Carbodiimideinheiten vor.

Beispiel 3

34,7 Gew.-Teile (0,09 Mol) eines Umsetzungsproduktes aus einem auf Butanol gestarteten Polypropylenpolyethylenglykolpolyethers (Mol-Verh. im eingesetzten Alkylenoxidgemisch von Propylenoxid : Ethylenoxid = 17:83, OH-Zahl 26) mit 1,4-Toluylen-diisocyanat (Gehalt an Ethylenoxideinheiten: 50 Gew.-%, NCO-Gehalt: 21,8 Gew.-%) und 94,3 Gew.-Teile (0,41 Mol) einer Mischung aus 3,5-Diethyl-2,4-toluylen-diisocyanat und 3,5-Diethyl-2,6-toluylen-diisocyanat (Verhältnis 7:3) werden bei 100 °C in Gegenwart von 0,5 ml einer 15 %igen Phospholinoxidlösung in N-Methylpyrrolidon als Katalysator carbodiimidisiert. Bei einem NCO-Wert von 13,7 % wird auf 60 °C abgekühlt und die Reaktion mit 0,2 ml Phosphortrichlorid abgebrochen. Es stellt sich ein konstanter NCO-Wert von 13,1 % ein. Es wird auf 100 °C erhitzt, mit 67,6 Gew.-

Teilen eines propoxylierten Adduktes aus 2-Butendiol-1,4 und $NaHSO_3$ Molekulargewicht: 430, 70 %ig in N-Methylpyrrolidon) sowie mit 10,3 Gew.-Teilen n-Butanol versetzt und bis zu einem NCO-Wert von 0 % zur Reaktion gebracht. Das erhaltene Reaktionsprodukt wird mit 95 Gew.-Teilen N-Methylpyrrolidon verdünnt.
Man erhält eine Lösung mit einem Feststoffgehalt von 68 Gew.-%, einem Gehalt an Carbodiimidgruppen -N=C=N-von 7,4 Gew.-% bezogen auf Feststoff, einem Gehalt an Ethylenoxideinheiten von 10 Gew.-% bezogen auf Feststoff und einem Gehalt an $SO_3$-Ionen von 64 Milliäquivalenten pro 100 g Feststoff. In dem Produkt liegen im Mittel 4,6 Carbodiimideinheiten pro Molekül vor.

Beispiel 4

115 Gew.-Teile (0,5 Mol) einer Mischung aus 3,5-Diethyl-2,4-toluylen-diisocyanat und 3,5-Diethyl-2,6-toluylendiisocyanat (Verhältnis 7:3) werden mit 0,5 ml der in Biespiel 3 genannten Phospholinoxidlösung als Katalysator bei 120 °C carbodiimidisiert. Bei einem NCO-Wert von 14,5 % wird auf 60 °C abgekühlt und die Reaktion mit 0,2 ml Phosphortrichlorid abgebrochen. Es stellt sich ein konstanter NCO-Wert von 14,0 % ein. Es wird auf 80 °C erhitzt, mit 67,6 Gew.-Teilen eines propoxylierten Adduktes aus 2-Butendiol-1,4-und $NaHSO_3$ (Molekulargewicht: 430 70%ig in N-Methylpyrrolidon) sowie mit 7,2 Gew.-Teilen (0,097 Mol) n-Butanol und 23,8 Gew.-Teilen eines auf Butanol gestarteten Polypropylenpolyethylenglykolpolyethers (Molverhältnis im eingesetzten Alkylenoxidgemisch von Propylenoxid:Ethylenoxid = 17:83, OH-Zahl 26) versetzt, mit 98,8 Gew.-Teilen N-Methylpyrrolidon verdünnt und bis zu einem NCO-Wert von 0 % zur Reaktion gebracht.
Man erhält eine Lösung mit einem Feststoffgehalt von 60 Gew.-%, einem Gehalt an Carbodiimidgruppen -N=C=N-von 7,45 Gew.-% bezogen auf Feststoff, einem Gehalt an $SO_3$-Ionen von 61 Milliäquivalenten pro 100 g Feststoff und einem Gehalt an Ethylenoxideinheiten von 10,4 Gew.-% pro 100 g Feststoff. Im Produkt liegen im Mittel 6,2 Carbodiimideinheiten pro Molekül vor.

Beispiel 5

115 Gew.-Teil (0,5 Mol) einer Mischung aus 3,5-Diethyl-2,4-toluylen-diisocyanat und 3,5-Diethyl-2,6-toluylen-diisocyanat (Verhältnis 7:3) werden mit 0,5 ml der in Beispiel 3 genannten Phospholinoxidlösung als Katalysator bei 100 °C carbodiimidisiert. Bei einem NCO-Wert von 20,8 % werden 50,8 Gew.-Teile (0,2 Mol) sulfoniertem 2,4-Diisocyanatotoluol, gelöst in 102 Gew.-Teilen N-Methylpyrrolidon, sowie 35,7 Gew.-Teile (0,3 Mol) Phenylisocyanat und 4 ml der Katalysatorlösung zugegeben und mit 170 Gew.-Teilen N-Methylpyrrolidon verdünnt. Das sulfonierte Diisocyanat wurde durch Umsetzung von äquimolaren Mengen an 2,4-Diisocyanatotoluol und Chlorsulfonsäure bei Raumtemperatur unter Verwendung von 1,2-Dichlorethan als Lösungsmittel hergestellt. Bei der Umsetzung der genannten Reaktionspartner in dem genannten Lösungsmittel fällt das Sulfonierungsprodukt als Festkörper aus. Zur weiteren Durchführung der erfindungsgemäßen Umsetzung wird bis zu einem NCO-Wert von 0 % carbodiimidisiert und der Ktalysator anschließend mit 1 ml Thionylchlorid vernichtet. Danach wird mit 20,2 Gew.-Teilen (0,2 Mol) Triethylamin versalzt und die freigesetzten NCO-Gruppen werden mit 14,8 Gew.-Teilen (0,2 Mol) n-Butanol umgesetzt.
Man erhält eine Lösung mit einem Feststoffgehalt von 42 Gew.-%, einem Gehalt an Carbodiimidgruppen -N=C=N-von 13.3 Gew.-% bezogen auf Feststoff und einem Gehalt an $SO_3$-Ionen von 103 Milliäquivalenten pro 100 g Feststoff. Im Produkt liegen im Mittel 3 Carbodiimideinheiten pro Molekül vor.

Beispiel 6

111 Gew.-Teile (0,5 Mol) Isophorondiisocyanat werden mit 1 Gew.-Teil der in Beispiel 1 genannten Katalysatorlösung bei 140 °C carbodiimidisiert. Bei einem NCO-Wert von 14,7 % wird auf 60 °C abgekühlt, mit 0,5 Gew.-Teilen Phosphortrichlorid abgebrochen und mit 150 Gew.-Teilen N-Methylpyrrolidon verdünnt. Es stellt sich ein konstanter NCO-Wert von 5,6 % ein. Das erhaltenene Reaktionsprodukt wird mit 86 Gew.-Teilen (0,14 Mol) eines p ropoxylierten Adduktes aus 2-Butendiol-1,4 und $NaHSO_3$ mit (Molekulargewicht: 430, 70 %ig in N-Methylpyrrolidon) sowie nacht 10 Minuten mit 3,6 Gew.-Teilen (0,05 Mol) n-Butanol versetzt und bis zu einem NCO-Wert von 0 % zur Reaktion gebracht.
Es entsteht einen Lösung mit einem Gehalt an Carbodiimideinheiten -N=C=N- von 8,5 Geew.-%, bezogen auf Feststoff und einem Gehalt an $SO_3$-Ionen von 88 Milliäquialenten pro 100 g Feststoff. In dem Produkt liegen pro Molekül im Mittel 14,4 Carbodiimideinheiten vor.

Beispiel 7

115 Gew.-Teile (0,5 Mol) einer Mischung aus 3,5-Diethyl-2,4-toluylen-diisocyanat und 3,5-Diethyl-2,6-toluylen-diisocyanat (Verhältnis 7:3) werden mit 0,2 ml der in Beispiel 3 genannten Katalysatorlösung bei 120°C carbodiimidisiert. Bei einem NCO-Wert von 26,9 % wird auf 60°C abgekühlt und die Reaktion mit 0,2 ml Phosphortrichlorid abgebrochen. Es stellt sich ein konstanter NCO-Wert von 26,3 % ein. Es wird auf 100°C erhitzt, mit 103,4 Gew.-Teilen (0,16 Mol) eines propoxylierten Adduktes aus 2-Butendiol-1,4- und $NaHSO_3$ (Molekulargewicht: 430, 70 %ig in N-Methylpyrrolidon) sowie mit 25,0 Gew.-Teilen (0,34 Mol) n-Butanol versetzt, mit 106 Gew.-Teilen N-Methylpyrrolidon verdünnt und bis zu einem NCO-Wert von 0 % zur Reaktion gebracht.
Man erhält eine Lösung mit einem Feststoffgehalt von 60 Gew.-%, einem Gehalt an Carbodiimidgruppen -N=C=N- von 2,9 Gew.-% bezogen auf Feststoff und einem Gehalt an $SO_3$-Ionen von 82 Milliäquivalenten pro 100 g Feststoff. Im Produkt liegen im Mittel pro Molekül 0,9 Carbodiimideinheiten vor.

Beispiel 8

115 Gew.-Teile (0,5 Mol) einer Mischung aus 3,5-Diethyl-2,4-toluylen-diisocyanat und 3,5-Diethyl-2,6-toluylendiisocyanat (Verhältnis 7:3) werden mit 0,5 ml der in Beispiel 3 genannten Katalysatorlösung bei 120°C carbodiimidisiert. Bei einem NCO-Wert von 14,5 % wird auf 60°C abgekühlt und die Reaktion mit 0,21 ml Phosphortrichlorid abgebrochen. Es stellt sich ein konstanter NCO-Wert von 14,1 % ein. Es wird auf 80°C erhitzt, mit 88,6 Gew.-Teilen (0,14 Mol) eines propoxylierten Adduktes aus 2-Butendiol-1,4 und $NaHSO_3$ (Molekulargewicht: 430, 70 %ig in N-Methylpyrrolidon) sowie mit 3,5 Gew.-Teilen (0,05 Mol) n-Butanol versetzt, mit 100 Gew.-Teilen Aceton verdünnt und bis zu einem NCO-Wert von 0 % zur Reaktion gebracht. Das Aceton wird anschließend im Vakuum abgezogen und der Feststoff zu Pulver zermahlen.
Der erhaltene Feststoff hat einen Gehalt an Carbodiimidgruppen -N=C=N- von 8 Gew.-%, bezogen auf Feststoff und einen Gehalt an $SO_3$-Ionen von 88 Milliäquivalentent pro 100 g Feststoff. Im Produkt liegen im Mittel pro Molekül 14,1 Carbodiimideinheiten vor.

Beispiel 9

174 Gew.-Teile (1,o Mole) 2,4-Toluylen-diisocyanat werden in 200 Gew.-Teilen Methylglykolacetat gelöst und bei Raumtemperatur mit 0,05 Gew.-Teilen eines technischen Gemischs aus 1-Methyl-1-phospha-2-cyclopenten-1-oxid und 1-Methyl-1-phospha-3-cyclopenten-1-oxid versetzt und auf 80°C erhitzt. Der Carbodiimidisierungsgrad kann an der $CO_2$-Entwicklung und am Abfall des NCO-Gehaltes verfolgt werden. Bei einem NCO-Gehalt von 6,57 % wird auf 60°C abgekühlt und mit 0,1 Gew.-Teilen Phosphortrichlorid abgestoppt. Nach weiteren 30 Minuten stellt sich ein konstanter NCO-Wert ein.

Analyse des Reaktionsproduktes:

NCO-Wert: 6,35
NCN-Einheiten prop Molekül (Durchschnittswert): 2,87
Das erhaltene Reaktionsgemisch wird mit 300 Gew.-Teilen Methylglykolacetat verdünnt und bei 80C mit 83,54 Gew.-Teilen (0,136 Mol) eines propoxylierten Adduktes aus 2-Butendiol-1,4-und $NaHSO_3$ (MG: 430; 70 %ig in Toluol) sowie nach 10 Minuten mit 18,1 Gew.-Teilen (0,244 Mol) n-Butanol versetzt und bis zu einem NCO-Wert von 0 % zur Reaktion gebracht. Es entsteht eine Lösung mit einem Gehalt an Carbodiimideinheiten -N=C=N- von 12,5 %, bezogen auf Feststoff, und einem Gehalt an $SO_3{}^{\ominus}$-Ionen von 63 Milliäquivalenten pro 100 g Feststoff. In dem Produkt liegen pro Molekül im Mittel 6,1 Carbodiimideinheiten vor.

Beispiel 10

174 Gew.-Teile (1,0 Mol) 2,4-Toluylen-diisocyanat werden in 200 Gew.-Teilen Aceton gelöst, bei Raumtemperatur mit 0,1 Gew.-Teilen eines technischen Gemisches aus 1-Methyl-1-phospha-2-cyclopenten-1-oxid und 1-Methyl-1-phospha-3-cyclopenten-1-oxid versetzt und auf 80°C erhitzt. Der Carbodiimidisie-

rungsgrad kann an der $CO_2$-Entwicklung und am Abfall des NCO-Gehaltes verfolgt werden. Bei einem NCO-Gehalt von 6,6 % wird auf 60 °C abgekühlt und mit 0,2 Gew.-Teilen Phosphortrichlorid abgestoppt. Nach weiteren 30 Minuten stellt sich ein konstanter NCO-Wert ein.

Analyse des Reaktionsproduktes:

NCO-Wert: 6,38
NCN-Einheiten pro Molekül (Durchschnittswert): 2,85

Das erhaltene Reaktionsgemisch wird bei 80 °C mit 90,3 Gew.-Teilen (0,21 Mol) eines propoxylierten Adduktes aus 2-Butendiol und $NaHSO_3$ (MG: 430; 70 %ig in Toluol) sowie nach 10 Minuten mit 7,31 Gew.-Teilen (0,099 Mol) n-Butanol versetzt und bis zu einem NCO- Wert von 0 % zur Reaktion gebracht. Anschließend werden 557 Gew.-Teile Wasser zugegeben und das Aceton wird abdestilliert. Man erhält eine wäßrige Lösung mit einem Feststoffgehalt von 32,7 %, einem Gehalt an Carbodiimidgruppen -N=C=N- von 11,7 %, bezogen auf Feststoff, und einen Gehalt an $SO_3^{\ominus}$-Ionen von 88 Milliäquivalenten pro 100 g. In dem Produkt liegen im Mittel pro Molekül 15,1 Carbodiimideinheiten vor.

Die nachstehend tabellarisch zusammengefaßten anwendungstechnischen Prüfungen sollen die Wirkungsweise der erfindungsgemäßen Zusatzmittel demonstrieren. Zur anwendungstechnischen Prüfung wurden die Carbodiimidgruppen enthaltenden Zusatzmittel mit handelsüblichen, Carboxylgruppen oder potentielle Carboxylgruppen (Carboxylatgruppen mit flüchtigen Triethylammonium-Gegenionen) enthaltenden Dispersionen umgesetzt. Stellvertretend für ihre Produktklasse wurden folgende Dispersionen untersucht:

Dispersion A: ® Euderm Grund 25 A (Handelsname der Bayer AG) Wäßige Acrylatdisoersion mit einem Trockengehalt von 40 % und einem Gehalt an Carboxylgruppen von 136 Milliäquivalenten pro 100 g Feststoff.

Dispersion B: ® Euderm Resin 50 B (Handelsname der Bayer AG) Wäßrig Polybutadiendispersion mit einem Trockengehalt von 40 % und einem Gehalt an Carboxylgruppen von 91 Milliäquivalenten pro 100 g Feststoff.

Dispersion C: ® Bayderm Finish 60 UD (Handelsname der Bayer AG) Wäßrige Polyurethandispersion mit einem Trockengehalt von 40 % und einem Gehalt an CarboxylatGruppen (Flüchtige Triethylammonium-Gegenionen) von 29 Milliäquivalenten pro 100 g Feststoff.

Die Dispersionen wurden mit den in der nachstehenden Tabelle angegebenen Mengen der erfindungsgemäßen Zusatzmittel gemäß den vorstehenden Beispielen 1, 5 oder 10 verrührt und aus den Mischungen mit einem 1000 μ Rakel Filme auf eine Glasplatte aufgezogen. Die Filme wurden bei den jeweils angegebenen Temperaturen getrocknet und anschließend auf Reißfestigkeit, Bruchdehnung sowie 100 %-Modul vermessen. Zur Überprüfung der Naßfestigkeit wurden die Filme vor den Messungen 24 Stunden in Wasser gelagert und unmittelbar anschließend ohne erneute Trocknung vermessen. Die Ergebnisse sind in der nachfolgenden Tabelle wiedergegeben. Angegeben wird die Rießfestigkeit in MPa, die Bruchdehnung in %, der 100 %-Modul in MPa, die Trocknungstemperaturen in °C und die Trocknungszeit in Minuten. Die Menge des eingesetzten Zusatzmittels wird in Prozent der Lösung des jeweiligen Beispiels bezogen auf eingesetzte Dispersion angegeben.

**Tabelle 1** (Prüfung nach DIN 53 504)

| Disp. | Zusatzmittel Beisp. | % | Trockn. Temp. °C | Zeit min | ohne Wasserlagerung Reißf. MPa | Bruchd. % | 100 %-M. MPa | nach Wasserlagerung Reißf. MPa | Bruchd. % | 100 %-M. MPa |
|---|---|---|---|---|---|---|---|---|---|---|
| A | ohne | | 60 | 100 | 2,8 | 800 | - | - | 950 | - |
| A | ohne | | 120 | 30 | 4,3 | 800 | - | 1,1 | 950 | - |
| A | 1 | 5 | 60 | 100 | 7,3 | 300 | 1,8 | 2,4 | 300 | - |
| A | 1 | 5 | 120 | 30 | 7,9 | 300 | 2,0 | 3,1 | 300 | 0,4 |
| B | ohne | | 60 | 100 | 1,6 | 850 | - | 2,1 | 850 | - |
| B | ohne | | 120 | 30 | 3,7 | 850 | - | 2,6 | 850 | - |
| B | 1 | 5 | 60 | 100 | 4,7 | 500 | 0,4 | 4,2 | 450 | 0,4 |
| B | 1 | 5 | 120 | 30 | 6,4 | 500 | 1,2 | 4,7 | 450 | 0,8 |
| C | ohne | | 60 | 100 | 11,2 | 450 | 0,5 | 6,7 | 450 | 0,5 |
| C | ohne | | 120 | 30 | 10,3 | 140 | 1,0 | 2,6 | 140 | - |
| C | 1 | 5 | 60 | 100 | 17,2 | 300 | 2,0 | 10,8 | 350 | 1,5 |
| C | 5 | 6 | 120 | 30 | 28,9 | 300 | 5,5 | 26,1 | 300 | 4,2 |
| C | 10 | 5 | 120 | 30 | 21,6 | 80 | 4,4 | 13,3 | 80 | 2,3 |

## Ansprüche

1. Carbodiimidgruppen aufweisende Isocyanat-Derivate, die bei einem Gehalt an Carbodiimidgruppen -N=C=N- von 2 bis 30 Gew.-% im statistischen Mittel pro Molekül mindestens 0,8 Carbodiimidgruppen aufweisen, dadur ch gekennzeichnet, daß sie
   5 bis 200 Milliäquivalente pro 100 g Feststoff an chemisch eingebauten Sulfonatgruppen
   und gegebenenfalls
   0 bis 25 Gew.-%, bezogen auf Feststoff, an chemisch eingebauten, innerhalb von Polyetherketten vorliegenden Ethylenoxideinheiten $-CH_2-CH_2-O-$ aufweisen.

2. Carbodiimidgruppen enthaltende Isocyanat-Derivate gemäß Anspruch 1, dadurch gekennzeichnet, daß sie
   5 bis 15 Gew.-% an aromatisch gebundenen Carbodiimideinheiten und
   5 bis 120 g Milliäquivalente pro 100 g Feststoff an chemisch eingebauten Sulfonatgruppen aufweisen.

3. Verfahren zur Herstellung von Carbodiimidgruppen enthaltenden Isocyanat-Derivaten gemäß Anspruch 1 und 2 durch zumindest teilweise Carbodiimidisierung der Isocyanatgruppen von a) organischen Polyisocyanaten oder von Gemischen von
   organischen Poly- und Monoisocyanaten einer mittleren NCO-Funktonalität von 1,3 bis 2,5 und anschließende Umsetzung der gegebenenfalls in dem Carbodiimidisierungsprodukt noch vorliegenden freien Isocyanatgruppen mit b) mono- und/oder polyfunktionellen Verbindungen mit gegenüber Isocyanatgruppen reaktionsfähigen Gruppen unter Einhaltung eines solchen Äquivalentverhältnisses daß auf jede Isocyanatgruppe mindestens eine gegenüber Isocyanatgruppen reaktionsfähige Gruppe entfällt, dadurch gekennzeichnet, daß man als Komponenten a) und/oder b) chemisch eingebaute Sulfonatgruppen oder durch eine Neutralisationsreaktion in Sulfonatgruppen überführbare Gruppen aufweisende Verbindungen (mit)verwendet, wobei nach erfolgter Umsetzung, gegebenenfalls vorliegende, in Sulfonatgruppen überführbare Gruppen ganz oder teilweise durch eine Neutralisation in Sulfonatgruppen überführt werden, und wobei die Art und Mengenverhältnisse der Reaktionspartner, der Carbodiimidisierungsgrad und gegebenenfalls der Neutralisationsgrad so gewählt werden, daß die Verfahrensprodukte den in Anspruch 1 oder 2 genannten Gehalt an Carbodiimid- und Sulfonatgruppen auf weisen.

4. Verfahren gemäß Anspruch 3, dadurch gekennzeichnet, daß als Aufbaukomponenten a) und/oder b) Verbindungen mitverwendet werden, die innerhalb von Polyetherketten eingebaute Ethylenoxideinheiten aufweisen, wobei die Menge dieser Aufbaukomponenten so gewählt wird, daß die Verfahrensprodukte bis zu 25 Gew.-% an solchen Ethylenoxideinheiten aufweisen.

5. Verwendung der Carbodiimidgruppen enthaltenden Isocyanat-Additionsprodukte gemäß Anspruch 1 und 2 als Zusatzmittel für wäßrige Dispersionen oder Lösungen von Carboxylgruppen und/oder in Carboxylgruppen überführbare Gruppen aufweisenden Kunststoffen.

## Claims

1. Isocyanate derivatives having carbodiimide groups, which at an -N=C=N- carbodiimide group content of 2 to 30% by weight have on statistical average at least 0.8 carbodiimide groups per molecule, characterized in that they have 5 to 200 milliequivalents per 100 g of solid of chemically incorporated sulphonate groups and, if desired, 0 to 25% by weight, relative to the solid, of chemically incorporated ethylene oxide unit $-CH_2-CH_2-O-$present within polyether chains.

2. Isocyanate derivatives containing carbodiimide groups according to Claim 1, characterized in that they have 5 to 15% by weight of aromatically bound carbodiimide units and 5 to 120 g of milliequivalents per 100 g of solid of chemically incorporated sulphonate groups.

3. Process for the preparation of isocyanate derivatives containing carbodiimide groups according to

Claim 1 and 2 by at least partial carbodiimidization of the isocyanate groups of a) organic polyisocyanates or mixtures of organic poly- and monoisocyanates having an average NCO functionality of 1.3 to 2.5, followed by reaction of the free isocyanate groups which may still be present in the carbodiimidization product with b) monoand/or polyfunctional compounds having groups which are reactive towards isocyanate groups, while maintaining such an equivalent ratio that at least one group which is reactive towards isocyanate groups is present for each isocyanate group, characterized in that chemically incorporated sulphonate groups are (additionally) used as components a) and/or b) or compounds are used which have groups convertible into sulphonate groups by a neutralization reaction, any groups convertible into sulphonate groups present after the reaction has been carried out are converted completely or partially into sulphonate groups by neutralization, and the type and relative amount of the reactant, the carbodiimidization degree and, if appropriate, the neutralization degree being selected such that the process products have the carbodiimide and sulphonate group content mentioned in Claim 1 or 2.

**4.** Process according to Claim 3, characterized in that compounds which have ethyleneoxide units incorporated within polyether chains are additionally used as structural components a) and/or b), the amount of these structural components being selected such that the process products have up to 25% by weight of ethyleneoxide units of this type.

**5.** Use of the isocyanate addition products containing carbodiimide groups according to Claim 1 and 2 as additives for aqueous dispersions on solutions of plastics having carboxyl groups and/or groups convertible into carboxyl groups.

## Revendications

**1.** Dérivés d'isocyanates présentant des groupes carbodiimides qui présentent, à une teneur en groupes carbodiimides -N=C=N- de 2 à 30 % en poids dans la moyenne statistique par molécule, au moins 0,8 groupe carbodiimide, **caractérisés en ce qu'**ils présentent
5 à 200 milli-équivalents par 100 g de matière solide de groupes sulfonates incorporés por voie chimique
et éventuellement
de 0 à 29 % en poids, calculé sur la matière solide, d'unités d'oxyde d'éthylène $-CH_2-CH_2-O-$ incorporées par voie chimique et présentes au sein de chaînes polyéthers.

**2.** Dérivés diisocyanate contenant des groupes carbodiimides selon la revendication 1, **caractérisés en ce qu'** ils présentent
5 à 15 % en poids d'unités carbodiimides liées à des radicaux aromatiques et
5 à 120 milli-équivalents par 100 g de matière solide de groupes sulfonates incorporés par voie chimique.

**3.** Procédé pour la préparation de dérivés diisocyanates contenant des groupes carbodiimides selon les revendications 1 et 2, par carbodiimidation au moins partielle des groupes isocyanates de a) polyisocyanates organiques ou de mélanges de poly- et mono-isocyanates organiques à fonctionnalité NCO moyenne de 1,3 à 2,5 et par réaction ultérieure des groupes isocyanates libres se trouvant encore éventuellement présents au sein du produit de carbodiimidation, avec b) des composés mono et/ou polyfonctionnels contenant des groupes aptes à réagir vis-à-vis de groupes isocyanates, tout en maintenant un rapport équivalent tel qu'à chaque groupe isocyanate correspond au moins un groupe apte à réagir vis-à-vis de groupes isocyanates, **caractérisé en ce qu'**on utilise (conjointement), comme composant a) et/ou b), des composés présentant des groupes sulfonates incorporés par voie chimique ou des groupes aptes à se transformer en groupes sulfonates par une réaction de neutralisation, procédé dans lequel, au terme de la réaction, on transforme complètement ou en partie des groupes éventuellement présents et aptes à se transformer en groupes sulfonates, par une neutralisation, en groupes sulfonates et dans lequel on sélectionne le type et les rapports quantitatifs des partenaires réactionnels, le degré de carbodiimidation et éventuellement le degré de neutralisation, de telle sorte que les produits issus du procédé présentent la teneur mentionnée dans la revendication 1 ou 2, en groupes carbodiimides et sulfonates.

4. Procédé selon la revendication 3, **caractérisé en ce que**, comme composants de synthèse a) et/ou b), on utilise conjointement des composés qui présentent des unités d'oxyde d'étnylèrte incorporées au sein de chaines polyéthers, la guantité de ces composants de synthèse étnnt sélectionnée de manière telle que les produits obtenus par le procédé présentent jusqu'à 25 % en poids de telles unités d'oxyde d'éthylène.

5. Utilisation des produits d'addition d'isooyanates contenant des groupes carbodiimides selon les revendications 1 et 2, comme agents d'addition pour des dispersions ou des solutions aqueuses de matières synthétiques présentant des groupes carboxyle et/ou des groupes aptes à se transformer en groupes carboxyle.